# EUROPÄISCHE PATENTSCHRIFT

(11) **EP 1 177 616 B1**
(45) Veröffentlichungstag und Bekanntmachung des Hinweises auf die Patenterteilung: **19.09.2007**
(21) Anmeldenummer: 00940139.9
(22) Anmeldetag: 20.04.2000
(51) Int. Cl.: H02P 6/08, H02H 7/08

(54) **ELEKTRONISCH KOMMUTIERBARER MOTOR, INSBESONDERE FÜR EINE FLÜSSIGKEITSPUMPE**
ELECTRONICALLY COMMUTABLE MOTOR, IN PARTICULAR, FOR A LIQUID PUMP
MOTEUR A COMMUTATION ELECTRONIQUE, EN PARTICULIER POUR UNE POMPE A LIQUIDE

(30) Priorität: 29.04.1999 DE 19919462
(43) Veröffentlichungstag der Anmeldung: 06.02.2002
(73) Patentinhaber: ROBERT BOSCH GMBH, 70442 Stuttgart (DE)
(72) Erfinder: MACK, Rolf, D-76547 Sinzheim (DE); KOCH, Stefan, D-77855 Achern (DE)
(86) Internationale Anmeldenummer: PCT/DE2000/001236
(87) Internationale Veröffentlichungsnummer: WO 2000/067368

(56) Entgegenhaltungen:
- DE-A- 2 117 639
- DE-A- 19 630 036
- GB-A- 2 260 785
- US-A- 4 961 037
- US-A- 5 942 866

## Beschreibung

### Stand der Technik

Die Erfindung betrifft einen elektronisch kommutierbaren Motor, insbesondere für eine Flüssigkeitspumpe, bei dem die Erregerwicklungen über von Steuersignalen einer Kommutierungseinrichtung gesteuert Halbleiterschalter mit einer Versorgungsgleichspannung verbindbar und wieder von dieser abschaltbar sind, und bei dem die Steuersignale der Kommutierungseinrichtung mittels pulsweitenmodulierbarer Ausgangssignalen eines PWM-Generators getaktet sind, dessen Pulsweitenverhältnis zusätzlich in Abhängigkeit vom Ausgangssignal eines Temperatursensors veränderbar ist.

Ein derartiger Motor ist aus der GB 2260 785 A bekannt. Der Motor treibt einen Ventilator an. Dabei wird die Umgebungstemperatur in einem Raum gemessen und mit einer vorgegebenen Temperatur z.B. gewünschten Raumtemperatur verglichen. Beide Temperaturwerte werden miteinander verglichen, wobei das Vergleichssignal das Ansteuersignal für den Motor verändert. Das Ansteuersignal wird von einem PWM-Generator erzeugt und das Pulsweitenverhältnis in Abhängigkeit von dem Vergleichssignal verändert. Dabei kann, wie die DE 196 30 036 A bei einem Steuerschalter zeigt, das Pulsweitenverhältnis bis zu einem vorgegebenen Temperaturwert mit einer ersten Taktfrequenz und beim Überschreiten dieses Temperaturwertes mit einer zweiten, niedrigeren Taktfrequenz festgelegt werden. Dies soll eine kleinere Dimensionierung für die Kühleinrichtung des Steuerschalters bringen.

Schließlich ist es auch bekannt, einen elektronisch kommutierbaren Motor beim Überschreiten einer vorgegebenen Grenztemperatur abzuschalten, wie die DE 21 17 639 A bei einem stromüberwachten Motor zeigt. Der Motorstrom wird dabei über ein temperaturabhängiges Bauelement geleitet.

Es ist Aufgabe der Erfindung, einen Motor der eingangs erwähnten Art zu schaffen, bei dem das Ausgangssignal des Temperatursensors in einfacher Weise in großem Regelbereich der Fördermenge einer Flüssigkeitspumpe für einen ersten Betriebszustand verwendet werden kann und nur in einem kritischen Endbereich als Schutzsignal dient.

Diese Aufgabe wird nach der Erfindung dadurch gelöst, dass der Temperatursensor die Temperatur in der Gehäusekammer der Flüssigkeitspumpe überwacht, dass bis zu einer vorgegebenen oder vorgebbaren Temperatur der PWM-Generator mit einem vorgegebenen oder vorgebbaren Betriebs-Pulsweitenverhältnis arbeitet, dass nach dem Überschreiten dieser Temperatur der PWM-Generator das Pulsweitenverhältnis in Abhängigkeit vom Ausgangssignal des Temperatursensors ändert und dass beim Erreichen einer Grenztemperatur in der Gehäusekammer das Ausgangssignal des Temperatursensors über den PWM-Generator die Abschaltung des Motors veranlasst.

Bleibt die Temperatur unterhalb des ersten vorgegebenen oder vorgebbaren Temperaturwertes, dann kann im Regelkreis bis zum Erreichen dieser Temperatur optimal geregelt werden, ohne eine Übersteuerung des Motors befürchten zu müssen. Wird die vorgegebene erste Temperatur überschritten, dann gelangt der Motor in einen kritischen Betriebsbereich und wird durch Veränderung des Pulsweitenverhältnisses der Ansteuersignale vor Überlastung geschützt. Ein weiterer vorgegebener Temperaturwert dient zum Abschalten des Motors, wenn die Veränderung des Pulsweitenverhältnisses nicht zur Betriebsstabilisierung ausreicht und der Motor in der Tat überlastet werden könnte. Auf diese Weise wird bis zum kritischen Temperaturwert ein sicherer und ungefährdeter optimaler Betrieb des Motors einer Flüssigkeitspumpe gewährleistet, wobei der Einfluss der geförderten Flüssigkeitsmenge auf die Erwärmung des Motors durch die Art der Veränderung des Pulweitenverhältnisses der Ansteuersignale berücksichtigt werden kann.

Mit dem Einsatz des PWM-Generators mit variablem Pulsweitenverhältnis kann eine Leistungsregelung des Motors erreicht werden. Der Flüssigkeitsdurchfluss kann nicht nur vorgegeben werden, er ist auch automatisch an die vom Temperatursensor erfaßte Temperatur in der Gehäusekammer gekoppelt und kann in Abhängigkeit davon geändert werden. Die Abhängigkeit kann dabei so gewählt werden, dass mit steigender Temperatur in der Gehäusekammer das Pulsweitenverhältnis zunimmt oder abnimmt.

Der Flüssigkeitsdurchfluss kann bei steigender Temperatur zunehmen und zur stärkeren Kühlung des Motors verwendet werden. Es ist jedoch auch möglich, bei steigender Temperatur die Leistung des Motors und damit den Flüssigkeitsdurchfluss zu reduzieren. Dies richtet sich nach dem Einsatz des Motors und den Betriebsbedingungen.

Lediglich der PWM-Generator wird als Zusatzkomponente für diese Zusatzfunktionen des Motors benötigt.

Das temperaturabhängige Ausgangssignal für den PWM-Generator ist nach einer Ausgestaltung dadurch ableitbar, dass als Temperatursensor ein in einen Spannungsteiler einbezogener NTC-Widerstand verwendbar ist und dass am Spannungsteiler ein Spannungsabfall als Ausgangssignal abgreifbar ist, der mit zunehmender Temperatur abnimmt, oder dadurch, dass als Temperatursensor ein in einem Spannungsteiler einbezogener PTC-Widerstand verwendet ist und dass am Spannungsteiler ein Spannungsabfall als Ausgangssignal abgreifbar ist, der mit zunehmender Temperatur zunimmt.

Die Ansteuerung der Halbleiterschalter mit ihren Erregerwicklungen mit pulsweitenmodulierten Steuersignalen wird auf einfache Weise dadurch erreicht, dass die Steuersignale der Kommutierungseinrichtung und die Ausgangssignale des PWM-Generators über mit UND-Schaltungen versehene Treiberschaltungen die Halbleiterschalter mit den Erregerwicklungen ansteuern.

Ein auf die elektrischen und elektronischen Bauteile erweiterter Temperaturschutz wird dadurch erreicht, dass die für den Betrieb des Motors erforderlichen elektrischen oder elektronischen Bauteile auf einer ebenfalls in der Gehäusekammer untergebrachten Leiterplatte angeordnet sind.

Die Erfindung wird anhand eines als Prinzipschaltbild dargestellten Ausführungsbeispiels näher erläutert.

Im Ausführungsbeispiel hat der Motor zwei Erregerwicklungen W₁ und W₂, die über Halbleiterschalter T₁ und T₂ an die Versorgungsgleichspannung U_{batt} anschaltbar und von dieser abschaltbar sind. Der Aufbau des Motors mit einer größeren Anzahl von Erregerwicklungen bedingt lediglich weitere Halbleiterschalter und eine andere Kommutierungseinrichtung KE mit der entsprechenden Anzahl von zeitlich versetzten Steuersignalen.

Mit dem zusätzlichen PWM-Generator PWM-G können hochfrequente Taktsignale ergänzt werden, deren Pulsweitenverhältnis PWV mit der Vorgabe eines Sollwertes Uₛₒₗₗ verändert werden kann, um die Leistung des Motors und damit den Flüssigkeitsdurchfluss steuern und/oder regeln zu können. Die Ausgangssignale des PWM-Generators PWM-G werden allen mit UND-Schaltungen U₁ bzw U₂ versehenen Treiberschaltungen der Halbleiterschalter T₁ und T₂ zugeführt. Dabei wird nur der Halbleiterschalter T₁ oder T₂ durchgesteuert, dessen zugeordnete Treiberschaltung gerade von der Kommutierungseinrichtung KE angesteuert wird. Wie mit der Inverterstufe I angedeutet ist, werden die beiden Treiberschaltungen im Ausführungsbeispiel invers angesteuert.

Dem PWM-Generator PWM-G wird zusätzlich ein Ausgangssignal Ut eines Temperatursensors TS zugeführt, das zu einer weiteren Änderung des Pulsweitenverhältnisses PWV des PWM-Generators PWM-G verwendet wird.

Als Temperatursensor TS kann ein NTC- oder PTC-Widerstand verwendet werden, der in einen Spannungsleiter mit den Widerständen R₁ und R₂ eingeschaltet ist. An dem Spannungsleiter kann als Ausgangssignal Ut ein Spannungsabfall abgegriffen werden, der mit zunehmender Temperatur in der Gehäusekammer abnimmt oder zunimmt. Je nach den Erfordernissen kann die Pulsweite der Ausgangssignale des PWM-Generators PWM-G mit zunehmendem Ausgangssignal Ut des Temperatursensors TS zunehmen oder abnehmen. Dasselbe gilt auch für ein Abnehmen des Ausgangssignals Ut des Temperatursensors TS. Die Abhängigkeit ist wählbar und richtet sich nach dem Einsatz des Motors und den Betriebsbedingungen. Es läßt sich mit dem Temperatursensor TS neben der Steuerung und/oder Regelung der Leistung in Abhängigkeit eines Sollwertes Uₛₒₗₗ zusätzlich eine Temperaturschutzfunktion in die Motorsteuerung einbeziehen, die schon während des Betriebs in Funktion tritt und zudem als Temperaturschutz zum Abschalten des Motors beim Überschreiten einer Grenztemperatur ausgeübt werden kann.

Die neue Motorsteuerung bietet dabei unter Berücksichtigung der erfassten Temperatur viele Variationsmöglichkeiten. So kann die zusätzliche temperaturabhängige Änderung des Pulsweitenverhältnisses des PWM-Generators PWM-G erst ab einer vorgegebenen oder vorgebbaren Temperatur einsetzen und die Leistung des Motors erhöhen oder reduzieren. Zudem ist diese Art der Motorsteuerung bei jeder Bauart des elektronisch kommutierbaren Motors einsetzbar, wobei der Motor nicht nur als Innenläufer, sondern auch als Aussenläufer angelegt sein kann.

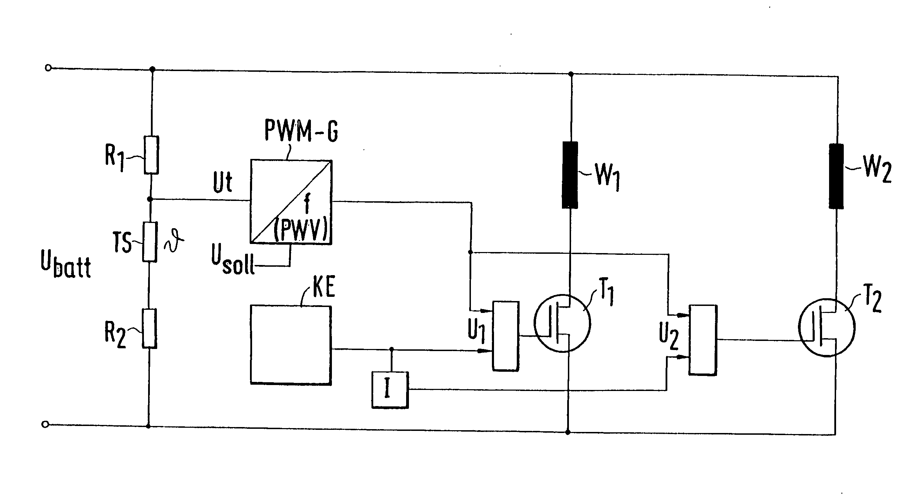

## Patentansprüche

1. Elektronisch kommutierbarer Motor, insbesondere für eine Flüssigkeitspumpe, bei dem die Erregerwicklungen (W₁, W₂) über von Steuersignalen einer Kommutierungseinrichtung (KE) gesteuert Halbleiterschalter (T₁,T₂) mit einer Versorgungsgleichspannung (U_{batt}) verbindbar und wieder von dieser abschaltbar sind, und bei dem die Steuersignale der Kommutierungseinrichtung (KE) mittels pulsweitenmodulierbarer Ausgangssignalen eines PWM-Generators (PWM-G) getaktet sind, dessen Pulsweitenverhältnis (PWV) zusätzlich in Abhängigkeit vom Ausgangssignal eines Temperatursensors (TS) veränderbar ist,
**dadurch gekennzeichnet,**
**dass** der Temperatursensor (TS) die Temperatur in der Gehäusekammer der Flüssigkeitspumpe überwacht,
**dass** bis zu einer vorgegebenen oder vorgebbaren Temperatur der PWM-Generator (PWM-G) mit einem vorgegebenen oder vorgebbaren Betriebs-Pulsweitenverhältnis arbeitet,
**dass** nach dem Überschreiten dieser Temperatur der PWM-Generator (PWM-G) das Pulsweitenverhältnis (PWV) in Abhängigkeit vom Ausgangssignal (Ut) des Temperatursensors (TS) ändert und
**dass** beim Erreichen einer Grenztemperatur in der Gehäusekammer das Ausgangssignal (Ut) des Temperatursensors (TS) über den PWM-Generator (PWM-G) die Abschaltung des Motors veranlasst.

2. Elektronisch kommutierbarer Motor nach Anspruch 1,
**dadurch gekennzeichnet,**
**dass** als Temperatursensor (TS) ein in einem Spannungsteiler (R₁, R₂) einbezogener NTC-Widerstand verwendbar ist und
**dass** am Spannungsteiler (R₁, R₂) ein Spannungsabfall als Ausgangssignal (Ut) abgreifbar ist, der mit zunehmender Temperatur abnimmt.

3. Elektronisch kommutierbarer Motor nach Anspruch 1 oder 2,
**dadurch gekennzeichnet,**
**dass** als Temperatursensor (TS) ein in einem Spannungsteiler (R₁,R₂) einbezogener PTC-Widerstand verwendet ist und
**dass** am Spannungsteiler (R₁,R₂) ein Spannungsabfall als Ausgangssignal (Ut) abgreifbar ist, der mit zunehmender Temperatur zunimmt.

4. Elektronisch kommutierbarer Motor nach Anspruch 1 oder 2,
**dadurch gekennzeichnet,**
**dass** mit steigender Temperatur in der Gehäusekammer das Pulsweitenverhältnis (PWV) zunimmt oder abnimmt.

5. Elektronisch kommutierbarer Motor nach einem der Ansprüche 1 bis 4,
**dadurch gekennzeichnet,**
**dass** die Steuersignale der Kommutierungseinreichtung (KE) und die Ausgangssignale des PWM-Generators (PWM-G) über mit UND-Schaltungen (U₁, U₂) versehene Treiberschaltungen die Halbleiterschalter (T₁,T₂) mit den Erregerwicklungen (W₁,W₂) ansteuern.

6. Elektronisch kommutierbarer Motor nach einem der Ansprüchen 1 bis 5,
**dadurch gekennzeichnet,**
**dass** die für den Betrieb des Motors erforderlichen elektrischen oder elektronischen Bauteile auf einer ebenfalls in der Gehäusekammer untergebrachten Leiterplatte angeordnet sind.

## Claims

1. Electronically commutatable motor, in particular for a liquid pump, in which motor the field windings (W₁, W₂) can be connected to and disconnected again from a DC supply voltage (U_{batt}) via semiconductor switches (T₁, T₂) which are controlled by control signals from a commutation device (KE), and in which motor the control signals from the commutation device (KE) are clocked by means of pulse-width-modulated output signals from a PWM generator (PWM-G) whose pulse-width ratio (PWV) can additionally be changed as a function of the output signal from a temperature sensor (TS),
**characterized**
**in that** the temperature sensor (TS) monitors the temperature in the housing chamber of the liquid pump,
**in that** the PWM generator (PWM-G) operates at a prescribed or prescribable operating pulse-width ratio up to a prescribed or prescribable temperature,
**in that** the PWM generator (PWM-G) changes the pulse-width ratio (PWV) as a function of the output signal (Ut) from the temperature sensor (TS) after this temperature is exceeded, and
**in that** the output signal (Ut) from the temperature sensor (TS) causes the motor to be switched off via the PWM generator (PWM-G) when a limit temperature is reached in the housing chamber.

2. Electronically commutatable motor according to Claim 1, **characterized in that** the temperature sensor (TS) used can be an NTC resistor which is incorporated in a voltage divider (R₁, R₂), and **in that** a voltage drop can be tapped off from the voltage divider (R₁, R₂) as an output signal (Ut), this voltage drop decreasing as the temperature increases.

3. Electronically commutatable motor according to Claim 1 or 2, **characterized in that** the temperature sensor (TS) used is a PTC resistor which is incorporated in a voltage divider (R₁, R₂), and **in that** a voltage drop can be tapped off from the voltage divider (R₁, R₂) as an output signal (Ut), this voltage drop increasing as the temperature increases.

4. Electronically commutatable motor according to Claim 1 or 2, **characterized in that** the pulse-width ratio (PWV) increases or decreases as the temperature in the housing chamber rises.

5. Electronically commutatable motor according to one of Claims 1 to 4, **characterized in that** the control signals from the commutation device (KE) and the output signals from the PWM generator (PWM-G) actuate the semiconductor switches (T₁, T₂) with the field windings (W₁, W₂) via driver circuits which are provided with AND circuits (U₁, U₂).

6. Electronically commutatable motor according to one of Claims 1 to 5, **characterized in that** the electrical or electronic components which are required for operation of the motor are arranged on a printed circuit board which is likewise accommodated in the housing chamber.

## Revendications

1. Moteur à commutation électronique, notamment pour une pompe à liquide selon lequel les enroulements d'excitation (W₁, W₂) sont relies à une tension continue d'alimentation (U_{batt}) par des commutateurs à semi-conducteurs (T₁, T₂) commandés par les signaux de commande d'une installation de commutation (KE) et sont de nouveau coupés de cette tension continue d'alimentation et selon lequel les signaux de commande de l'installation de commutation (KE) sont commandés en cadence par les signaux de sortie modulés en largeur d'impulsion d'un générateur PWM (PWM-G) dont le rapport de largeur d'impulsion (PWV) est variable en plus en fonction du signal de sortie d'un capteur de température (TS),
**caractérisé en ce que** le capteur de température (TS) surveille la température dans la chambre du boîtier de la pompe à liquide,
et **en ce que** jusqu'à une température prédéfinie ou susceptible d'être prédéfinie, le générateur PWM (PWM-G) fonctionne avec un rapport de largeur d'impulsion prédéfini ou susceptible d'être prédéfini,
- après le dépassement de cette température, le générateur PWM (PWM-G) modifie le rapport de largeur d'impulsion (PWV) en fonction du signal de sortie (Ut) du capteur de température (TS) et lorsqu'on atteint une température limite dans la chambre du boîtier, le signal de sortie (Ut) du capteur de température (TS) commande la coupure du moteur par le générateur PWM (PWM-G).

2. Moteur à commutation électronique selon la revendication 1,
**caractérisé en ce que**
le capteur de température (TS) est une résistance NTC intégrée dans un diviseur de tension (R₁, R₂) et
le diviseur de tension (R₁, R₂) fournit comme signal de sortie (Ut) une différence de tension qui diminue lorsque la température augmente.

3. Moteur à commutation électronique selon la revendication 1 ou 2,
**caractérisé en ce que**
le capteur de température (TS) est une résistance PTC intégrée dans un diviseur de tension (R₁, R₂) et
le diviseur de tension (R₁, R₂) fournit comme signal de sortie (Ut), une chute de tension qui augmente lorsque la température augmente.

4. Moteur à commutation électronique selon la revendication 1 ou la revendication 2,
**caractérisé en ce que**
le rapport de largeur d'impulsion (PWV) augmente ou diminue en fonction de l'augmentation de la température dans la chambre du boîtier.

5. Moteur à commutation électronique selon l'une des revendications 1 à 4,
**caractérisé en ce que**
les signaux de commande de l'installation de commutation (KE) et les signaux de sortie du générateur PMW (PWM-G) commandent par l'intermédiaire de circuits pilotes munies de portes ET (U₁, U₂), les commutateurs à semi-conducteurs (T₁, T₂) qui commandent les enroulements d'excitation (W₁, W₂).

6. Moteur à commutation électronique selon l'une des revendications 1 à 5,
**caractérisé en ce que**
les composants électriques et électroniques nécessaires au fonctionnement du moteur sont prévus sur une plaque de circuit installée également dans la chambre du boîtier.
